Europäisches Patentamt

European Patent Office

Office européen des brevets

(11) Publication number: **0 307 845**
**A1**

## EUROPEAN PATENT APPLICATION

(21) Application number: **88114887.8**

(22) Date of filing: **12.09.88**

(51) Int. Cl.4: **G03G 15/32 , H04N 1/024 , H04N 1/00**

(30) Priority: **11.09.87 JP 229167/87**

(43) Date of publication of application:
**22.03.89 Bulletin 89/12**

(84) Designated Contracting States:
**DE FR GB**

(71) Applicant: **SHARP KABUSHIKI KAISHA**
**22-22 Nagaike-cho Abeno-ku**
**Osaka 545(JP)**

(72) Inventor: **Aiba, Masahiko**
**231-20, Nagai-cho Kou**
**Nara-shi Nara(JP)**

(74) Representative: **Patentanwälte TER MEER -**
**MÜLLER - STEINMEISTER**
**Mauerkircherstrasse 45**
**D-8000 München 80(DE)**

(54) **An image processor with laser means operable as an image reader and a printer.**

(57) An image processor comprising an image sensor for reading an image of a document, an image forming processor with a photocoductor, a laser device (20,21) for emitting a laser beam and a switching mirror (24) being operable between the first position for deflecting the laser beam toward the document and the second position for deflecting the laser beam toward the photoconductor is disclosed.

The image processor controls the laser device (20,21) and the switching mirror (24) so as to scan a dccument in image reading mode and, in image forming mode, controls them so as to form an electrostatic latent image according to image data read by the image sensor and print an image corresponding to the document image.

*Fig. 2*

EP 0 307 845 A1

## An Image Processor with laser means operable as an image reader and a printer

## BACKGROUND OF THE INVENTION

### Field of the Invention

The present invention relates to an image processor providing laser means which is usable for both of an image reader and a printer.

### Description of the Prior Art

Recently, the image reader for reading an image of a document as binarized image data and the printer for printing an image of a document according to outputs from the image reader are widely used. As to the image reader, so called image scanner is widely used which provides a CCD (charge coupled device) array for reading an image of a document by scanning the image. As to the printer, various printers such as so called wire dot printer, laser printer and the like are used.

In the laser printer, a latent image is formed on a photoconductor by scanning the photoconductor with a laser beam being modulated in accordance with image data, the latent image is developed with toner and the developed image is transferred on a paper sheet.

Conventionally, the image reader and the printer are manufactured as apparatuses independent from each other although they can be connected with each other so as to print out an image of a document based on image data read by the image reader.

## SUMMARY OF THE INVENTION

An object of the present invention is to provide an image processor being able to read an image of a document and print out the read image.

Another object of the present invention is to provide an image processor having laser means being usable for both of reading an image of a document and printing out the image having been read.

In order to accomplish these objects, according to the present invention, there is provided an image processor comprising: an image sensor for reading an image of a document upon scanning the document; an image forming processor with a photoconductor for developing an electrostatic latent image formed on the photoconductor and transferring the developed image onto a sheet; a laser means for emitting a laser beam; a switching mirror being operable between the first position for deflecting the laser beam toward the document and the second position for deflecting the laser beam toward the photoconductor; and a laser control means for controlling said laser means and said switching mirror so as to scan a document in image reading mode and so as to form an electrostatic latent image according to image data read by said image sensor in image forming mode.

Accordingly, a document is illuminated and scanned by said laser device in the image reading mode, and the scanned image of a document is read by said image sensor.

On the contrary, in the image forming mode, said laser device is driven according to image data read by said image sensor and the laser beam emitted therefrom is deflected toward said photoconductor by said switching means to form an electrostatic latent image on said photoconductor.

## BRIEF DESCRIPTION OF DRAWINGS

These and other objects and features of the present invention will become more apparent when the preferred embodiment of the present invention is described in detail with reference of accompanied drawings in that;

Fig. 1 is a schematic cross-sectional view of an image processor according to the present invention;

Fig. 2 is a schematic plan view of the laser device shown in Fig. 1;

Fig. 3 is a block diagram of a control circuit of the image processor according to the present invention; and

Fig. 4 is a flow chart of a control program to be executed by the control circuit shown in Fig. 3.

## DETAILED DESCRIPTION OF THE PREFERRED EMBODIMENT

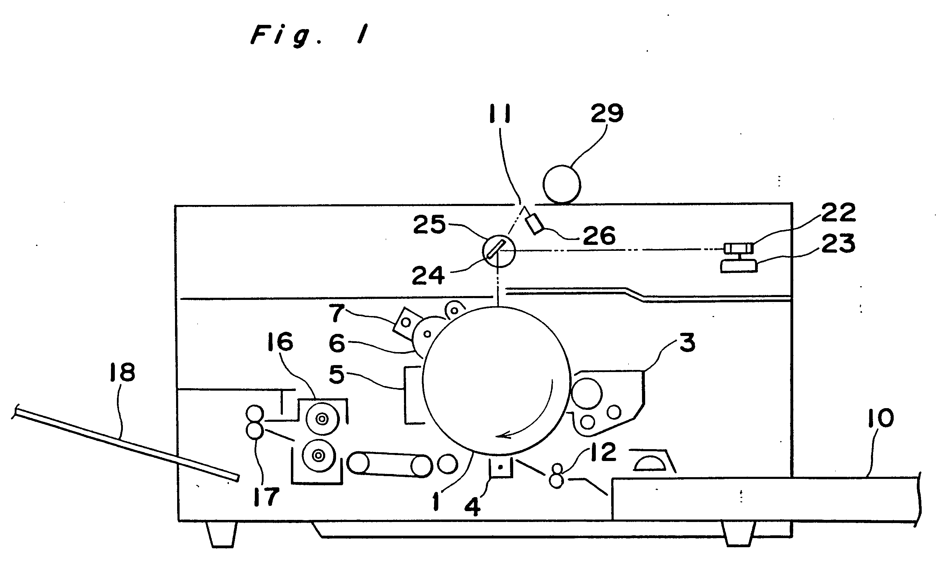

Fig. 1 shows a schematic cross-sectional view of an image processor according to the present invention.

A photoconductor drum 1 is arranged in the center portion of the body of the image processor. Around the photoconductor drum 1, a sensitizing charger 2, a developing unit 3, a transferring charger 4, a cleaner 5, an erasing charger 6 and an erasing lamp 7 are arranged.

On the upper surface of the body of the image processor, a slit 11 is perforated in order to read an image of a document and a roller 29 is provided for feeding a document so as to cross the slit 11. The document to be read is set toward the feed roller 29 from the left-hand side thereof in Fig. 1.

An image sensor 26 for reading an image of a document is provided below the slit 11. The image sensor 26 can be comprised of a CCD array.

A laser device for generating a laser beam is arranged in an upper space of the body.

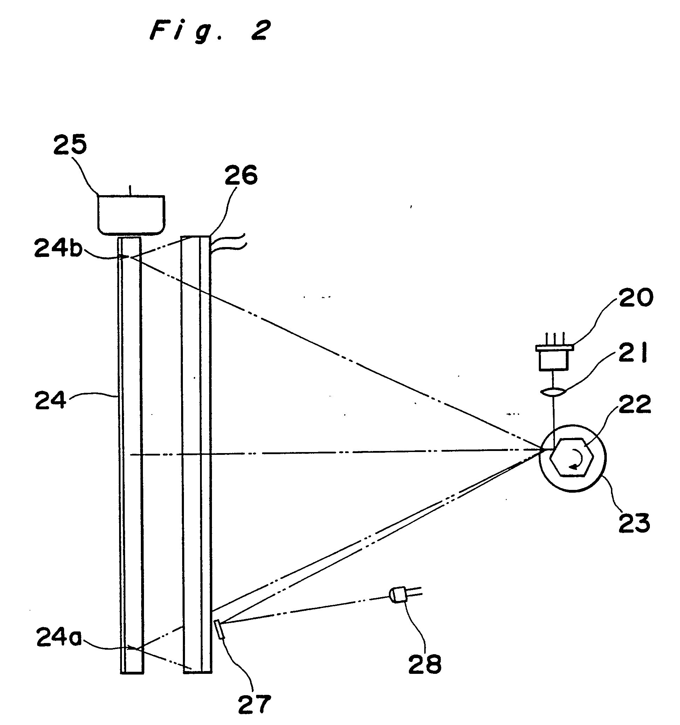

Fig. 2 shows a plan view of the laser device.

Laser light emitted from a laser diode 20 is condensed into a pencil laser beam by a condenser lens 21 and the laser beam is projected to either one of reflection mirrors of a polygon mirror device 22 and is reflected toward a switching mirror 24 thereby. The polygon mirror device 22 is driven to rotate around the center axis thereof at a high speed by a motor 23. According to the rotation of the polygon mirror 22, the laser beam is scanned from one end 24a to the other end 24b of the switching mirror 24 in the lengthwise direction thereof. Before the starting end 24a of the switching mirror 24, there is arranged a small reflecting mirror 27 and a photo-sensor 28 is provided for detecting a timing when the laser beam impinges onto the small reflecting mirror 27. This timing indicates a start timing for starting one line scan for the photoconductor drum 1 or a document and, therefore, the controller of the image processor controls individual devices thereof in synchronous with the start timing.

Referring to Fig. 1 again, the switching mirror 24 is supported by an operating device 25. The operating device 25 rotates the switching mirror 24 from an upward position for deflecting the laser beam toward the slit 11 to a downward position for deflecting the laser beam toward the photoconductor drum 1 or vice versa, as indicated by imaginary lines in Fig. 1.

In the state that the switching mirror 24 is switched to the upward position, the laser beam scanned by the polygon mirror 22 is deflected toward the slit 11 to illuminate a document set thereon and the light reflected from the document is projected to the image sensor 26. Namely, the image of the document is read by the image sensor 26.

On the contrary, when the switching mirror 24 is switched to the downward position, the laser beam generated in accordance with image data is deflected to expose the photoconductor drum 1 and, thereby, a latent image corresponding to the image of the document is formed. Fig. 1 shows the downward position of the switching mirror 24 and Fig. 2 shows the upward position thereof.

Upon printing, a blank paper sheet supplied from a cartridge 10 is fed by a pair of timing rollers 12 to a transferring station and the sheet on which a toner image is transferred is conveyed to a fixing device 16 to fix the toner image. Then, the sheet is discharged by a pair of discharging rollers 17 onto a tray 18.

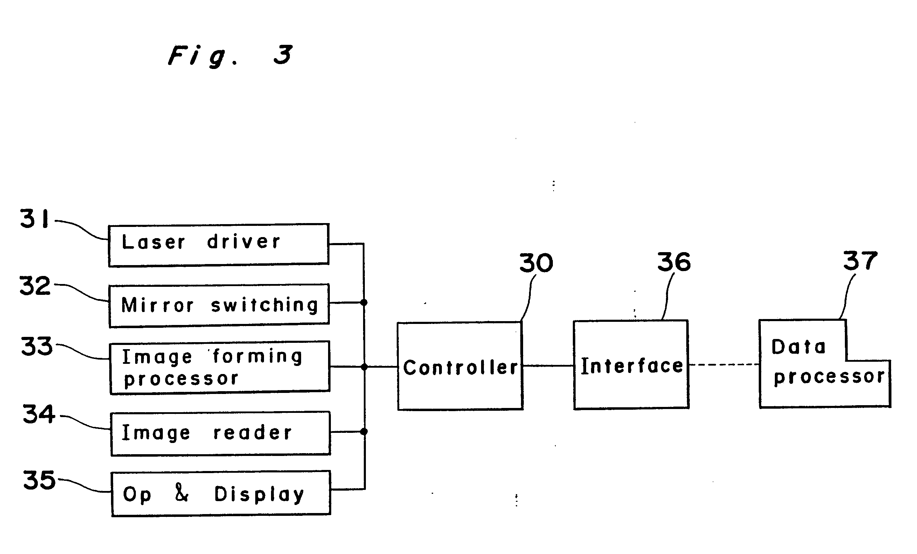

Fig. 3 shows a block diagram of a control circuit of the image processor.

The control circuit includes a controller 30 being comprised of a microcomputer. The controller 30 controls a laser driving section 31 for driving the laser diode 20 and the motor 23 which rotate the polygon mirror 22, a mirror switching section 32 for switching the switching mirror 24 from the upward position to the downward position or vice versa, an image forming processing section 33 which controls the electro-photographic image forming process, an image reading section 34 including the image sensor 26 and a displaying section 35 for displaying various operating states according to indications through an operation panel (not shown) by the user.

Further, the controller is connected with a data processor 37 for processing and storing image data through an interface 36 in order to enter image data into the data processor 37 and/or to access image data from the latter.

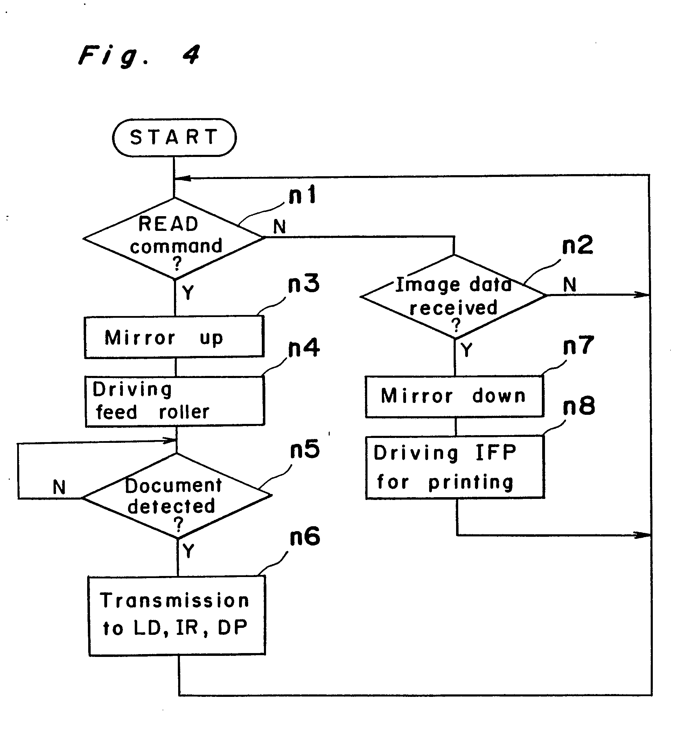

Fig. 4 shows a flow chart of a main routine to be executed by the controller 30.

When the main routine is started, it is checked at step n1 whether a READ command is received or not. If received, the controller 30 executes the image reading mode defined from step n3 to step n6.

If not received, the process goes to step n2 in order to check whether image data to be printed is received or not.

If the image data is received, the controller 30 executes the printing mode.

When the READ command is received, the switching mirror 24 is switched to the upward position at step n3 and the feeding roller 29 is driven to feed a document at step n4. When a document is inserted to the feeding roller 29 at step n5, the laser diode 20 is driven to read the image of the document.

Image data read by the image sensor 26 is transmitted to the data processor 37 at step n6.

On the contrary, when image data is received from the data processor 37 at step n2, the switching mirror 24 is switched to the downward position at step n7 and, then, the laser diode 20 is driven according to the image data to form a latent image corresponding thereto on the photoconductor drum 1.

At the same time, the image forming processing section 33 controls individual devices arranged around the photoconductor drum 1 to print an image of a document on a paper sheet at step n8.

As is apparent from the above, the image processor is operable not only as an image reader but also as a printer. In other words, the image processor according to the present invention has duplex functions of an image reader and a printer.

Further, it is to be noted that the image processor can have a copying function by providing a light path for guiding the light reflected from a document onto the photoconductor drum 1 directly.

It is also possible to composite or edit images by modulating the laser beam according to respective edition modes beforehand. In this case, the edition of images can be performed without processing image data on an image memory.

The preferred embodiments described herein are illustrative and not restrictive, the scope of the invention being indicated by the appended claims and all variations which come within the meanings of the claims are intended to be embraced herein.

## Claims

1. An image processor comprising:
an image sensor for reading an image of a document upon scanning the document;
an image forming processor with a photoconductor for developing an electrostatic latent image formed on the photoconductor and transferring the developed image onto a sheet;
a laser means for emitting a laser beam;
a switching mirror being operable between the first position for deflecting the laser beam toward the document and the second position for deflecting the laser beam toward the photoconductor; and
a laser control means for controlling said laser means and said switching mirror so as to scan a document in image reading mode and so as to form an electrostatic latent image according to image data read by said image sensor in image forming mode.

2. An image processor as claimed in claim 1, in which said image sensor is comprised of a CCD array.

3. An image processor as claimed in claim 1, in which said laser means is comprised of a laser diode, a condenser lens and a polygon mirror which is driven to rotate around the center axis thereof.

4. An image processor as claimed in claim 1, further comprising a feed roller for feeding a document in order to scan it by the laser beam.

5. An image processor as claimed in claim 4, further comprising a slit means across which the document is fed by said feed roller.

# Fig. 1

EP 0 307 845 A1

619741

619741

# Fig. 2

SHARP K.K.
619741

Fig. 3

# Fig. 4

```
              ( START )
                  │
                  ▼
            ╱ READ    ╲   n1
           ╱  command  ╲ ──── N ──────────────┐
           ╲    ?     ╱                        │
            ╲        ╱                         ▼
               │ Y                       ╱ Image data ╲   n2
               ▼                        ╱   received   ╲ ──── N ────→
         ┌─────────────┐  n3           ╲      ?       ╱
         │  Mirror  up │                   │ Y
         └─────────────┘                   ▼
               │                     ┌──────────────┐  n7
               ▼               n4    │  Mirror down │
         ┌─────────────┐             └──────────────┘
         │  Driving    │                   │
         │  feed roller│                    ▼
         └─────────────┘             ┌──────────────┐  n8
               │                     │ Driving IFP  │
        ┌──────▼──────┐              │ for printing │
        │          ╱     ╲   n5      └──────────────┘
   N ───┤        ╱ Document╲               │
        │        ╲ detected ╱               │
        │          ╲   ?   ╱                │
        └──────────   │ Y                   │
                      ▼                     │
               ┌───────────────┐  n6        │
               │ Transmission  │            │
               │ to LD, IR, DP │            │
               └───────────────┘            │
```

EP 0 307 845 A1

SHARP K.K.
619741

| DOCUMENTS CONSIDERED TO BE RELEVANT | | | EP 88114887.8 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | <u>US - A - 4 358 793</u> (HOSAKA)<br>* Fig. 1,2; abstract; column 4, claim 2 * | 1,4,5 | G 03 G 15/32<br>H 04 N 1/024<br>H 04 N 1/00 |
| A | * Fig. 2 * | 3 | |
| | -- | | |
| X | <u>EP - A2/A3 - 0 217 325</u> (TOSHIBA)<br>* Fig. 3,4; abstract * | 1,3,5 | |
| | -- | | |
| X | <u>US - A - 4 379 631</u> (KITAMURA)<br>* Fig. 33; abstract; column 6, line 22 * | 1,3 | |
| A | * Fig. 33; column 7, line 25 * | 2,5 | |
| | -- | | |
| A | <u>GB - A - 2 148 073</u> (FUJI PHOTO)<br>* Fig. 4; page 1, line 15 * | 1-5 | TECHNICAL FIELDS SEARCHED (Int. Cl.4) |
| | ---- | | G 03 G 15/00<br>H 04 N 1/00 |

| The present search report has been drawn up for all claims | | |
|---|---|---|
| Place of search<br>VIENNA | Date of completion of the search<br>28-12-1988 | Examiner<br>KRAL |